# EUROPÄISCHE PATENTANMELDUNG

(11) **EP 3 809 354 A1**
(43) Veröffentlichungstag der Anmeldung: **21.04.2021**
(21) Anmeldenummer: 20201786.9
(22) Anmeldetag: 14.10.2020
(51) Int. Cl.: G06Q 30/02

(54) **VERFAHREN ZUR GENERIERUNG VON ZUMINDEST TEILINHALTEN EINER WEBSEITE**

(30) Priorität: 15.10.2019 DE 102019127736
(71) Anmelder: Eisenbürger GmbH, 70327 Stuttgart (DE)
(72) Erfinder: EISENBÜRGER, Sebastian, 71093 Weil im Schönbuch (DE)
(74) Vertreter: Spachmann, Holger

(57) **Zusammenfassung**

Die Erfindung betrifft ein Verfahren zur Generierung von zumindest Teilinhalten einer Website (10) durch Trennung in einen sichtbaren (12) und einen nichtsichtbaren (14) Bereich eines Webseiteninhalts, wobei im nichtsichtbaren Bereich (14) Informationen dynamisch eingefügt werden, die auf dem Verhalten eines Webseitenbetrachters im sichtbaren Bereich (12) basieren, sowie eine Computernetzwerkstruktur (80) und ein Computerendgerät (90).

## Beschreibung

Die Erfindung betrifft ein Verfahren zur Generierung von zumindest Teilinhalten einer Webseite, eine Computernetzwerkstruktur und ein Computerendgerät.

### STAND DER TECHNIK

Es sind eine Vielzahl von Verfahren zum Aufbau und Anpassen von Webseiten, insbesondere statischen Webseiten, im Stand der Technik bekannt. Bestehende Webseiten und Onlinestores verwenden meist statische datenbankähnliche Webseiten, indem der Kunde aus einer Vielzahl von Produkten bzw. Produkteinträgen auswählen kann.

Beispielsweise zeigt die WO 2005/003906 eine dynamische Zusammensetzung von Webseiteninhalten, wobei diese aus einer Vielzahl von Komponenten zusammengestellt werden.

Ferner zeigt das Dokument DE 10 2011 081 930 A1 ein Verfahren zum Anpassen einer Onlinewerbekampagne für eine Webseite anhand eines Parameters des Webseiten betrachters.

Die DE 10 2013 202 782 A1 richtet sich auf die Anpassung von unterschiedlichen Webseitenkomponenten, welche anhand eines Triggers in ihrer Größe und Position verändert werden können.

Die WO 01/27760 zeigt die Optimierung einer Webpräsenz anhand von Nutzerdaten.

Nachteilig am Stand der Technik ist, dass derzeitige Webseiten und deren Aufbau das Potential des E-Commerce und Online nicht voll ausschöpft.

Aufgabe der vorliegenden Erfindung ist es, eine Webseite derart zu verbessern, dass das Verkaufserlebnis eines Nutzers gesteigert werden kann. Mit Ausführungsformen der Erfindung kann in vorteilhafter Weise ein verbessertes Verfahren zur Generierung von zumindest Teilinhalten einer Webseite bereitgestellt werden.

Diese Aufgabe wird durch das Verfahren, die Computernetzwerkstruktur und das Computerendgerät gemäß den unabhängigen Ansprüchen gelöst. Vorteilhafte Ausbildungen der Erfindung sind Gegenstand der Unteransprüche. Fachbegriffe werden auf die übliche Art und Weise verwendet. Wenn eine bestimmte Bedeutung einem bestimmten Begriff verliehen wird, werden im Folgenden Begriffsdefinitionen gegeben, in deren Rahmen die Begriffe verwendet werden.

### OFFENBARUNG DER ERFINDUNG

Erfindungsgemäß wird ein Verfahren zur Generierung von zumindest Teilinhalten einer Webseite durch Trennung in einen sichtbaren und einen nicht sichtbaren Bereich eines Webseiteninhalts bereitgestellt, wobei im nicht sichtbaren Bereich Informationen dynamisch eingefügt werden, die auf dem Verhalten eines Webseitenbetrachters im sichtbaren Bereich basieren.

Ein Vorteil dieser Ausführungsform kann sein, dass mithilfe der Anpassung des Inhalts im nicht sichtbaren Bereich ein zu übertragendes Datenvolumen minimiert werden kann, da für den Nutzer nicht interessante Inhalte gar nicht erst angezeigt werden, und somit, dass der Datenstrom zwischen einem Computerendgerät und einer Computernetzwerkstruktur deutlich reduziert werden kann. Ein weiterer Vorteil kann sein, dass mithilfe der angepassten Inhalte im nicht sichtbaren Bereich eine Verkaufssituation für einen Nutzer entsprechend seiner Vorlieben gestaltet werden kann. Beispielsweise können hierfür Medieninhalte im nicht sichtbaren Bereich eingefügt werden und diese nach einem Scrollvorgang im sichtbaren Bereich des Nutzers angezeigt werden. Dies bietet beispielsweise den Vorteil, dass, wenn der Nutzer gerne Videos über sein Produkt konsumieren möchte, das Verfahren automatisch mehr Videoinhalte im nicht sichtbaren Bereich bereitstellen kann.

Mit anderen Worten wird eine Webseite in einen sichtbaren und einen nicht sichtbaren Bereich geteilt. Dabei wird im sichtbaren Bereich dem Webseitenbetrachter eine Vielzahl von Medien, wie Texte, Bilder oder Videos, dargestellt, welche insbesondere mit einem Produkt bzw. mit einer Produktinformation verknüpft sein können. Ferner kann die Webseite im sichtbaren Bereich einen Button zum Kaufen eines Produktes aufweisen. Nachdem der Nutzer sich über die Webseite über ein Produkt informiert hat, kann er möglicherweise das Produkt über den Button kaufen. Sollte sich der Nutzer nicht für einen Kauf des Produktes entscheiden und noch unschlüssig sein, so wird er auf der Webseite scrollen, so dass der nicht sichtbare Bereich der Webseite für den Webseitenbetrachter sichtbar wird. In dem nicht sichtbaren Bereich der Webseite können Inhalte basierend auf dem Verhalten des Webseitenbetrachters im sichtbaren Bereich dargestellt werden. Das Verhalten kann insbesondere eine bevorzugte Konsumierung von Medientypen sein, wie beispielsweise, dass der Webseitenbetrachter gerne Produktevideos anschaut. Somit kann im nicht sichtbaren Bereich eine erhöhte Anzahl von Produktvideos positioniert bzw. bereitgestellt werden, so dass der Webseitenbetrachter gemäß seinen Vorlieben Medieninhalte konsumieren kann. Dies kann sich vorteilhaft auf eine Kaufentscheidung des Webseitenbetrachters auswirken. Darüber hinaus können Medieninhalte nicht übertragen bzw. deren Datenvolumen kann eingespart werden, welche der Webseitenbetrachter sehr wahrscheinlich nicht konsumieren würde. Im Gegensatz zu statischen Webseiten kann somit der Webseiteninhalt entsprechend des Verhaltens des Webseitenbetrachters im sichtbaren Bereich angepasst und somit ein Datenvolumen zur Übertragung zwischen einem Endgerät und einem Server reduziert werden.

In einer vorteilhaften Weiterbildung kann die vom Webseitenbetrachter genutzte Anzeigehardware bzw. der Umfang der von der Webseite auf der Anzeigehardware dargestellten Inhalte erfasst werden und die einzufügenden Informationen im nicht sichtbaren Bereich auf Basis von Interaktionen des Webseitenbetrachters mit den im nicht sichtbaren Bereich dargestellten Informationen beruhen. Ein Vorteil dieser Ausführungsform kann sein, dass basierend auf der Interaktion des Webseitenbetrachters im sichtbaren Bereich gezielt dargestellte Informationen ausgewertet werden können und somit der Inhalt, welcher im nicht sichtbaren Bereich dargestellt und bzw. bereitgestellt wird, an eine Vorliebe des Webseitenbetrachters angepasst werden kann. Somit kann die Übertragung von unnötigen Medieninhalten vermieden werden sowie ein eventueller Verkaufsvorgang verbessert werden.

Mit anderen Worten wird auf einem Anzeigegerät, wie beispielsweise einem Monitor oder einem Touchscreen, eine Vielzahl von Medieninhalten dargestellt. Dabei wird die Nutzung der Webseite durch den Webseitenbetrachter erfasst, um daran die einzufügenden Informationen im nicht sichtbaren Bereich anzupassen. Die Erfassung der Interaktionen zwischen dem Webseitenbetrachter und der Webseite im sichtbaren Bereich kann beispielsweise mittels Nutzereingaben, durch Auswertung von Maus- und Fingerbewegungen, Scroll- oder Zoomfunktion oder einem Eyetracking-Verfahren erreicht werden.

In einer vorteilhaften Weiterbildung kann der noch nicht dargestellte und dynamisch anpassbare Inhalt des nicht sichtbaren Bereichs durch einen Scrollvorgang in den Anzeigebereich der Anzeigehardware darstellbar ist und diese Information vor dem Erscheinen im sichtbaren Bereich adaptiv entsprechend der Vorlieben des Webseitenbetrachters angepasst wird.

Ein Vorteil dieser Ausführungsform kann sein, dass die Medieninhalte im nicht sichtbaren Bereich einem Computerendgerät erst bereitgestellt werden, wenn diese durch einen Scrollvorgang oder ähnliche Mustereingaben angefordert werden. Somit kann ein Datenstrom zwischen einem Endgerät und einem Server weiter verringert werden. Ferner können die Medieninhalte im nicht sichtbaren Bereich basierend auf den Vorlieben des Webseitenbetrachters angepasst werden, um somit den Webseitenbetrachter bei einer Kaufentscheidung zu unterstützen.

Mit anderen Worten kann der Webseitenbetrachter durch eine Nutzereingabe, wie beispielsweise einen Scrollvorgang und/oder einen Wisch- oder Swipevorgang oder jede andere Art der Nutzereingabe, den nicht sichtbaren Bereich der Webseite für den Webseitenbetrachter sichtbar machen. Dabei können die Inhalte, insbesondere Medieninhalte, welche zuvor nicht im nicht sichtbaren Bereich der Webseite waren, entsprechend der Vorlieben des Webseitenbetrachters angepasst werden. In anderen Worten stellt der Scrollvorgang oder ähnliche Nutzereingabe einen Trigger zur Anpassung der Medieninhalte der Webseite dar. Dabei kann der Scrollvorgang auch ein Herunterladen auf ein Endgerät von Medieninhalten von einem Server auslösen. Diese Medieninhalte können direkt im sichtbaren oder nicht sichtbaren Bereich der Webseite verwendet werden oder es kann eine Vielzahl von Medieninhalten auf dem Endgerät vorgehalten werden, beispielsweise wenn abzusehen ist, dass eine Bandbreite einer Datenverbindung gering ist.

In einer vorteilhaften Weiterbildung kann das Erfassen des Verhaltens des Webseitenbetrachters im sichtbaren Bereich die Schritte aufweisen:
- Erfassen des sichtbaren Bereichs der Webseite auf einem Anzeigegerät,
- Darstellen von zumindest zwei Medienelementen im sichtbaren Bereich der Webseite,
- Empfangen einer Eingabe des Webseitenbetrachters zur Auswahl eines der zumindest zwei Medienelemente,
- Berechnen des Verhaltens des Webseitenbetrachters basierend auf der Eingabe zur Auswahl.

Ein Vorteil dieser Ausführungsform kann sein, dass mithilfe der Berechnung des Verhaltens des Webseitenbetrachters eine Kaufentscheidung des Webseitenbetrachters positiv beeinflusst wird, insbesondere mithilfe einer Detektion über eine Auswahl von unterschiedlichen Medieninhalten.

Mit anderen Worten kann das Erfassen des Verhaltens des Webseitenbetrachters im sichtbaren Bereich ein Erfassen, Detektieren und/oder Empfangen des sichtbaren Bereichs, welche für einen Webseitenbetrachter sichtbar ist, der Webseite auf einem Anzeigegerät umfassen. Dabei kann das Anzeigegerät beispielsweise ein Monitor und/oder ein Touchscreen oder Ähnliches sein. Beispielsweise kann ein Auflösungsfenster von beispielsweise 1920 x 1080 Pixel auf einem Anzeigegerät detektiert werden, welches den sichtbaren Bereich beschreibt. Ferner kann dabei das Erfassen des Verhaltens des Webseitenbetrachters im sichtbaren Bereich ein Darstellen, Anzeigen und/oder Abspielen von zumindest zwei Medienelementen, wie beispielsweise ein Videoelement, Bildelement, Audioelement und/oder Textelement, im sichtbaren Bereich der Webseite umfassen. Beispielsweise können ein Videoelement und ein Textelement im sichtbaren Bereich der Webseite dargestellt werden. Darüber hinaus kann das Erfassen des Verhaltens des Webseitenbetrachters im sichtbaren Bereich ein Empfangen, Erkennen und/oder Abfragen einer Eingabe des Webseitenbetrachters zur Auswahl eines der zumindest zwei Elemente umfassen. Beispielsweise kann der Webseitenbetrachter mittels einer Nutzereingabe, wie beispielsweise einem Mausklick, Bewegung der Maus, Zoomfunktion oder mit einer Fingereingabe auf einem Touchscreen, eines der beiden Medienelemente auswählen. Beispielsweise kann er mithilfe eines Mausklicks aus den zwei Medienelementen, welche beispielsweise ein Videoelement und ein Textelement sind, ein Videoelement auswählen. Ferner kann das Erfassen des Verhaltens des Webseitenbetrachters im sichtbaren Bereich ein Berechnen, Bestimmen und/oder Ermitteln des Verhaltens des Webseitenbetrachters basierend auf der Eingabe zur Auswahl umfassen. Dabei kann man unter dem Berechnen bzw. Bestimmen des Verhaltens des Webseitenbetrachters basierend auf der Eingabe zur Auswahl eine Ermittlung von einem oder einer Vielzahl von Parametern der Nutzereingabe verstehen. Beispielsweise kann der Webseitenbetrachter mittels eines Mausklicks eines der Medienelemente auswählen, sodass der Berechnungsvorgang des Verhaltens des Webseitenbetrachters einfach möglich ist. Ferner kann ein Berechnen des Verhaltens des Webseitenbetrachters ebenso eine Messung der Zeit aufweisen, in der der Webseitenbetrachter mit seinem Blick auf einem Medienelement verweilt, um beispielsweise die Konsumierung eines Textelements zu detektieren.

In einer vorteilhaften Weiterbildung kann die Eingabe des Webseitenbetrachters eine Auswahl eines der zumindest zwei Medienelemente mittels einer Nutzereingabe sein, eine Verweilzeit eines Blickes des Webseitenbetrachters auf einem der zumindest zwei Medienelemente sein und/oder eine Nutzungsdauer eines der zumindest zwei Medienelemente durch den Webseitenbetrachter sein.

Ein Vorteil diese Ausführungsform kann sein, dass mithilfe einfacher Mittel die Präferenzen des Webseitenbetrachters abgefragt werden können und somit aufwändige Systeme oder Mittel zur Detektion der Präferenzen eines Webseitenbetrachters eingespart werden können.

Mit anderen Worten kann die Eingabe des Webseitenbetrachters aus einer Vielzahl von unterschiedlichen Erfassungsmöglichkeiten bestehen. Beispielsweise kann die Eingabe des Webseitenbetrachters eine Auswahl eines der zumindest zwei Medienelemente mittels einer Nutzereingabe, wie beispielsweise einem Mausklick und/oder eine Fingerauswahl, auf einem Touchdisplay sein. Auch eine charakteristische Mausbewegung oder Scroll- oder Zoomfunktion des Bildschirminhalts gerichtet auf eine Bildschirmfläche, die einen bestimmten Medieninhalt darstellt, kann zur Erfassung von Präferenzen des Webseitenbetrachters verwendet werden. Ferner kann die Auswahl eines der zumindest zwei Medienelemente mittels einer Detektion einer Verweilzeit eines Blickes des Webseitenbetrachters, beispielsweise mittels einer Webcam oder Ähnlichem, auf einem der zumindest zwei Medienelemente sein. Die Verweilzeit und der Fokus der Aufmerksamkeit kann auch indirekt über Mausbewegungen und/oder Bewegungen des Bildschirminhaltes sowie Vergrößerungen oder Aktivierung von Bildschirminhalten, z. B. Betätigung einer "Play"-Taste ermittelt werden. Darüber hinaus kann auch die Auswahl eines der zumindest zwei Medienelemente durch eine Erfassung einer Nutzungsdauer eines der zumindest zwei Medienelemente durch den Webseitenbetrachter sein, wie beispielsweise die Betrachtungsdauer eines Videos.

In einer vorteilhaften Weiterbildung kann jedes der zumindest zwei Medienelemente einen Typ aufweisen, wobei der Typ des Medienelements ein Videoelement, ein Audioelement, ein Textelement und/oder ein Bildelement sein kann, wobei das Verfahren den Schritt aufweist:
- Berechnen des Verhaltens des Webseitenbetrachters basierend auf der Eingabe zur Auswahl und dem Typ des ausgewählten Medienelements.

Ein Vorteil dieser Ausführungsform kann sein, dass mithilfe der Berechnung des Verhaltens des Webseitenbetrachters basierend auf der Eingabe zur Auswahl und dem Typ des ausgewählten Medienelements die Inhalte des nicht sichtbaren Bereichs der Webseite noch besser an die Vorlieben des Webseitenbetrachters angepasst werden können.

In anderen Worten sind die Medienelemente in unterschiedliche Typen aufgeteilt bzw. weisen unterschiedliche Charakteristika auf. Dabei können die Medienelemente beispielsweise ein Videoelement, ein Audioelement, ein Textelement und/oder ein Bildelement sein. Darüber hinaus können die Medienelemente auch jede andere Art von Medieninhalt sein, welcher mittels eines Computerendgeräts einem Webseitenbetrachter angezeigt bzw. ausgegeben werden kann.

In einer vorteilhaften Weiterbildung kann das dynamische Einfügen von Informationen in den nicht sichtbaren Bereich die Schritte aufweisen:
- Bereitstellen einer Vielzahl an Medienelementen auf einem Speichergerät,
- Auswählen zumindest eines Teils der Medienelemente basierend auf dem Verhalten des Webseitenbetrachters,
- Einfügen des Teils der Medienelemente im nicht sichtbaren Bereich der Webseite.

Ein Vorteil dieser Ausführungsform kann sein, dass mithilfe des Verhaltens des Webseitenbetrachters das Erscheinungsbild bzw. die Medieninhalte an die Vorlieben bzw. an das Verhalten des Webseitenbetrachters angepasst werden können.

In anderen Worten wird auf einem Speichergerät bzw. Speichermedium, wie beispielsweise einer Festplatte, einem Cloudspeicher oder einem portablen Speichergerät, wie ein USB-Stick, eine Vielzahl an Medienelementen, wie beispielsweise Videotexte, Audiobeiträge und/oder Bilder bereitgestellt, gespeichert und /oder zur Verfügung gestellt. Ferner kann mithilfe des ermittelten bzw. bestimmten oder berechneten Verhaltens des Webseitenbetrachters ein Teil, insbesondere ein oder eine Vielzahl von Medienelementen aus der Vielzahl an Medienelementen ausgewählt werden. Dies kann insbesondere mittels eines Aufrufbefehls oder Ähnlichem erfolgen, so dass die ausgewählten Medieninhalte vom Speichergerät bereitgestellt bzw. ausgelesen werden können. Darüber hinaus kann das dynamische Einfügen von Informationen in den nicht sichtbaren Bereich ein Einfügen, Bereitstellen und/oder Anzeigen des Teils der Medienelemente im nicht sichtbaren Bereich der Webseite umfassen. Unter dem Einfügen des Teils der Medienelemente kann eine Vielzahl von möglichen Aktionen, wie beispielsweise ein Herunterladen, Hochladen und/oder Abrufen von Medienelementen, verstanden werden, welche direkt in den nicht sichtbaren Bereich eingefügt und/oder vorgeladen bzw. gepuffert werden, um in den nicht sichtbaren Bereich eingefügt zu werden. Ferner kann dabei das Einfügen des Teils der Medienelemente im nicht sichtbaren Bereich auch einen direkten Download von einem Server umfassen, welcher dann auf dem Endgerät in die Webseite eingefügt wird.

In einer vorteilhaften Weiterbildung kann das dynamische Einfügen von Informationen die Schritte aufweisen:
- Empfangen einer Nutzereingabe zum Darstellen des nicht sichtbaren Bereichs,
- Darstellen des Teils der Medienelemente im sichtbaren Bereich.

Ein Vorteil dieser Ausführungsform kann sein, dass anhand der Nutzereingabe der sichtbare Bereich für den Webseitenbetrachter dargestellt wird, sodass die angepassten Medienelemente für den Nutzer sichtbar werden, was sich vorteilhaft auf eine Kaufentscheidung des Webseitenbetrachters auswirken kann.

Mit anderen Worten kann eine Nutzereingabe zum Darstellen des nicht sichtbaren Bereichs empfangen, bereitgestellt und/oder heruntergeladen werden. Bei der Nutzereingabe kann es sich beispielsweise um einen Mausklick, Mausbewegung, Bildschirmbewegung, Zoom oder einen Fingerdruck auf einen Touchscreen handeln, welcher das Signal umfasst, dass der nicht sichtbare Bereich der Webseite dargestellt werden soll. Daraufhin wird ein Darstellen, Bereitstellen und/oder Anzeigen des Teils der Medienelemente im sichtbaren Bereich ausgelöst. In einem Beispiel sieht der Webseitenbetrachter den sichtbaren Bereich und löst beispielsweise mittels eines Scrollrades einer Maus eine Bewegung der Webseite aus, sodass der nicht sichtbare Bereich für den Webseitenbetrachter sichtbar und der Teil der Medienelemente im sichtbaren Bereich dargestellt wird.

In einer vorteilhaften Weiterbildung kann der sichtbare Bereich der Webseite einen ersten Bereich und einen zweiten Bereich aufweisen, wobei der zweite Bereich dazu eingerichtet ist, zumindest ein Medienelement darzustellen, wobei der erste Bereich dazu eingerichtet ist, zumindest ein Begrüßungselement darzustellen, wobei das Verfahren die Schritte aufweist:
- Bereitstellen einer Vielzahl von Begrüßungselementen auf einem Datenträger,
- Empfangen zumindest einer Charakteristik des Webseitenbetrachters,
- Bestimmen zumindest einer Variablen, wobei die Variable ein Zeitelement, ein Wetterelement, ein Datumselement und/oder ein Situativelement ist,
- Anpassen des Begrüßungselements basierend auf der Charakteristik des Webseitenbetrachters und der bestimmten Variablen.

Ein Vorteil dieser Ausführungsform kann sein, dass mithilfe der Anpassung des Begrüßungselements ein positiver Ersteindruck für den Webseitenbetrachter erreicht werden kann, welcher sich unter Umständen vorteilhaft auf eine Kaufentscheidung des Webseitenbetrachters auswirken kann.

In anderen Worten weist die Webseite im sichtbaren Bereich einen ersten Bereich und einen zweiten Bereich auf. Der zweite Bereich ist dazu eingerichtet, Medienelemente, wie beispielsweise Videos, Bilder oder Audiodateien, bereit- bzw. darzustellen, wie voranstehend und nachfolgend beschrieben. Ferner kann im ersten Bereich ein Begrüßungselement dargestellt, angezeigt und/oder präsentiert werden. Ferner kann das Verfahren den Schritt Bereitstellen, Speichern und/oder Zurverfügungstellen einer Vielzahl von Begrüßungselementen auf einem Datenträger umfassen. Bei einem Begrüßungselement kann es sich beispielsweise um einen Text, um ein Banner, eine Animation oder Ähnliches handeln, welches im ersten Bereich der Webseite angezeigt wird. Ferner kann das Verfahren den Schritt Empfangen, Herunterladen und/oder Abfragen zumindest einer Charakteristik des Webseitenbetrachters aufweisen. Beispielsweise kann eine Charakteristik des Webseitenbetrachters eine Anzahl der Webseitenbesuche des Webseitenbetrachters sein, um bspw. ein Begrüßungselements oder den Webseiteninhalt anzupassen. Darüber hinaus kann das Verfahren den Schritt Bestimmen, Ermitteln und/oder Berechnen zumindest einer Variablen umfassen, wobei die Variable ein Zeitelement, Wetterelement, Datumselement und/oder ein Situativelement ist. Ein Zeitelement kann beispielsweise die Tageszeit sein. Das Wetterelement kann beispielsweise eine Wettersituation am Standort des Webseitenbetrachters sein. So kann die Auswertung von aktuellen, zukünftigen oder vergangenen Wetterdaten ein Kriterium zur dynamischen Darstellung von Webseiteninhalten darstellen. Ferner kann das Datumselement ein aktuelles Datum des Tages des Betrachtens für den Webseitenbetrachter sein. Darüber hinaus kann das Situativelement eine Darstellung eines Feiertages oder Ähnlichem sein. Darüber hinaus kann das Verfahren den Schritt Anpassen, Ändern und/oder Adaptieren des Begrüßungselements basierend auf der Charakteristik des Webseitenbetrachters unter bestimmten Variablen sein. Beispielsweise ist der Webseitenbetrachter das zweite Mal auf der Webseite, sodass ein Text im Begrüßungselement gewählt wird, welcher auf den wiederholten Besuch des Webseitenbetrachters hinweist. Darüber hinaus kann das Begrüßungselement beispielsweise ein Zeitelement sein, welches in diesem Beispiel abends ist, sodass das Begrüßungselement eher ein Banner aufweist, welches eine Abendsituation darstellt.

In einer vorteilhaften Weiterbildung kann der sichtbare Bereich der Webseite zumindest ein erstes Buttonelement aufweisen, wobei das Verfahren die Schritte aufweist:
- Detektieren einer Position eines Eingabemittels des Webseitenbetrachters,
- Vergleichen der Position des Eingabemittels des Webseitenbetrachters mit einer Position des ersten Buttonelements im sichtbaren Bereich,
- Ändern der Informationen im nicht sichtbaren Bereich, wenn die Position des Eingabemittels des Webseitenbetrachters mit der Position des ersten Buttonelements im Wesentlichen übereinstimmt und keine Aktivierung des ersten Buttonelements durch das Eingabemittel des Webseitenbetrachters erfolgt.

Ein Vorteil dieser Ausführungsform kann sein, dass mithilfe der Bestimmung der Positionen sowie der Aktivierung ein Kaufvorgang einfach überwacht werden kann und so abhängig davon, Informationen im nicht sichtbaren Bereich geändert werden können.

In anderen Worten können die Informationen bzw. Medieninhalte im nicht sichtbaren Bereich geändert, neu geladen und/oder heruntergeladen werden, wenn die Position des Eingabemittels des Webseitenbetrachters mit der Position des ersten Buttonelements im Wesentlichen übereinstimmt und keine Aktivierung des ersten Elements durch das Eingabemittel des Webseitenbetrachters erfolgt. Im Wesentlichen bedeutet hier, dass eine Position des Eingabemittels des Webseitenbetrachters nur wenige Pixel entfernt vom ersten Buttonelement positioniert ist, beispielsweise wie beispielsweise ein Rand von 10 bis 20 Pixel um das erste Buttonelement. Ferner kann unter dem Begriff "keine Aktivierung des ersten Buttonelements" verstanden werden, dass das Eingabemittel sich zwar im Wesentlichen auf derselben Position wie das erste Buttonelement befindet, jedoch keine Eingabe durch den Webseitenbetrachter erfolgt bzw. eine Eingabe durch das Eingabemittel des Webseitenbetrachters ausbleibt. Mit anderen Worten kann das Ausbleiben der Aktivierung des ersten Buttonelements, wenn die Position des ersten Buttonelements im Wesentlichen mit der Position des Eingabemittels übereinstimmt, als eine Art Trigger zur Änderung bzw. Anpassung und/oder Neuladen der Information im nicht sichtbaren Bereich verstanden werden. Beispielsweise können in solch einem Fall neue Medieninhalte in den nicht sichtbaren Bereich geladen werden bzw. Medieninhalte, welche bereits geladen bzw. bereitgestellt wurden, durch neue oder weitere Medieninhalte ausgetauscht werden.

In einer vorteilhaften Weiterbildung kann das Verfahren den Schritt aufweisen:
- Hinzufügen eines zweiten Buttonelements im nicht sichtbaren Bereich, wenn die Position des Eingabemittels des Webseitenbetrachters mit der Position des ersten Buttonelements im Wesentlichen übereinstimmt und keine Aktivierung des ersten Buttonelements durch das Eingabemittel des Webseitenbetrachters erfolgt.

Ein Vorteil dieser Ausführungsform kann sein, dass, wenn eine Aktivierung des ersten Buttonelements durch das Eingabemittel ausbleibt, im nicht sichtbaren Bereich ein weiterer Button hinzugefügt werden kann, um mithilfe von weiteren angepassten Medieninhalten den Webseitenbetrachter von einer möglichen Kaufentscheidung zu überzeugen

In anderen Worten wird ein zweites Buttonelement im nicht sichtbaren Bereich hinzugefügt, eingefügt und/oder bereitgestellt, wenn die Position des Eingabemittels des Webseitenbetrachters mit der Position des ersten Buttonelements im Wesentlichen übereinstimmt und keine Aktivierung des ersten Buttonelements durch das Eingabemittel des Webseitenbetrachters erfolgt. Im Wesentlichen bedeutet hierbei, dass die Position des Eingabemittels entweder auf der Fläche des ersten Buttonelements liegt oder auf einer Fläche um das erste Buttonelement herum, wie beispielsweise ein Rand von 10 bis 20 Pixel um das erste Buttonelement. Ferner kann unter dem Begriff "keine Aktivierung des ersten Buttonelements" verstanden werden, dass das Eingabemittel nicht durch den Webseitenbetrachter aktiviert bzw. ausgelöst wird, sodass das Buttonelement unberührt bleibt.

In einer vorteilhaften Weiberbildung kann das Verfahren den Schritt aufweisen:
- Anpassen der Informationen im nicht sichtbaren Bereich, wenn die Position des Eingabemittels des Webseitenbetrachters mit der Position des ersten Buttonelements im Wesentlichen übereinstimmt und keine Aktivierung des ersten Buttonelements durch das Eingabemittel des Webseitenbetrachters erfolgt, wobei das Anpassen der Informationen im nicht sichtbaren Bereich die Schritte aufweist:
- Bereitstellen einer Vielzahl von Zertifizierungselementen auf einem Datenträger,
- Darstellen zumindest eines Teils der Zertifizierungselemente im nicht sichtbaren Bereich.

Ein Vorteil dieser Ausführungsform kann sein, dass mithilfe der Darstellung von Zertifizierungselementen, wie Zertifikate des angezeigten Produkts oder Nutzermeinungen, im nicht sichtbaren Bereich, welche jedoch über einen Scrollvorgang oder Ähnliches für den Webseitenbetrachter sichtbar werden, diese den Webseitenbetrachter in einer Entscheidungsfindung zum Kauf eines Produktes auf der Webseite unterstützen können. Dies kann insbesondere dadurch ausgelöst werden, dass das erste Buttonelement durch den Webseitenbetrachter nicht aktiviert wird und daraufhin Zertifizierungselemente im nicht sichtbaren Bereich bereitgestellt werden. Diese werden durch einen Scrollvorgang für einen Webseitenbetrachter sichtbar, welcher sich so eventuell von dem Produkt durch das nun sichtbare Zertifizierungselement überzeugen lässt und somit einen Kaufvorgang, beispielsweise an einem Buttonelement, auslöst.

Mit anderen Worten kann das Verfahren ein Anpassen der Information im nicht sichtbaren Bereich aufweisen, wenn die Position des Eingabemittels des Webseitenbetrachters mit der Position des ersten Buttonelements im Wesentlichen übereinstimmt, gleich ist und/oder überlappt und keine Aktivierung bzw. Auslösen des ersten Buttonelements durch das Eingabemittel des Webseitenbetrachters erfolgt. Dabei kann im Wesentlichen bedeuten, dass sich das Eingabemittel des Webseitenbetrachters nicht auf der Fläche bzw. Position des ersten Buttonelements befindet und auch nicht direkt angrenzend lokalisiert ist, wie beispielsweise mit einem Abstand von 10 bis 20 Pixel. Ferner kann unter dem Begriff "keine Aktivierung des ersten Buttonelements" verstanden werden, dass der Webseitenbetrachter das erste Buttonelement nicht aktiviert bzw. eine Eingabe zurückhält. Ferner kann das Anpassen der Informationen ein Bereitstellen, Speichern und/oder Zurverfügungstellen einer Vielzahl von Zertifizierungselementen auf einem Datenträger, wie beispielsweise einem Server, einem Cloudspeicher oder Ähnlichem umfassen. Darüber hinaus kann das Anpassen der Informationen ein Darstellen bzw. Laden bzw. Herunterladen zumindest eines Teils der Zertifizierungselemente im nicht sichtbaren Bereich umfassen. Beispielsweise ist der Webseitenbetrachter in seiner Kaufentscheidung unsicher und lässt das Eingabemittel zwar auf dem ersten Buttonelement ruhen, klickt jedoch nicht. Somit können im nicht sichtbaren Bereich Zertifizierungselemente, wie bspw. Zertifikate des Produkt, Nutzermeinungen oder ähnliches bereitgestellt werden, welche den Webseitenbetrachter von dem Produkt überzeugen können, wenn der Webseitenbetrachter scrollt und somit der nicht sichtbare Bereich sichtbar wird.

In einer vorteilhaften Weiterbildung kann das dynamische Einfügen von Informationen im nicht sichtbaren Bereich zumindest einen der folgenden Schritte, insbesondere alle folgenden Schritte, aufweisen:
- Empfangen eines Eingabe-/Ausgabeelements des Webseitenbetrachters, wobei das Eingabeelement angibt, welche Form der Kommunikation der Webseitenbetrachter nutzen kann,
- Empfangen eines Historieelements, wobei das Historieelement angibt, wie oft der Webseitenbetrachter die Webseite betrachtet hat,
- Empfangen eines Demografieelements, wobei das Demografieelement ein Alter und/oder ein Geschlecht des Webseitenbetrachters angibt,
- Bestimmen eines Verhaltenselements des Webseitenbetrachters, wobei das Verhaltenselement eine Verweildauer des Webseitenbetrachters auf der Webseite, ein Scrollverhalten des Webseitenbetrachters und/oder ein Klickverhalten des Webseitenbetrachters angibt,
- Herstellen einer Verbindung zu einer Datenbank zum Empfang eines Informationselements, wobei das Informationselement eine Socialmedianutzung des Webseitenbetrachters, eine Bonität des Webseitenbetrachters und/oder eine Geoposition des Webseitenbetrachters angibt,
- Anpassen der Information im nicht sichtbaren Bereich, basierend auf dem Eingabe-/Ausgabeelement, dem Historieelement, dem Demografieelement, dem Verhaltenselement und/oder dem Informationselement.

Ein Vorteil dieser Ausführungsform kann sein, dass mithilfe der spezifischen Situation und Position des Webseitenbetrachters die Informationen im nicht sichtbaren Bereich entsprechend angepasst werden können. Dies kann insbesondere den Vorteil mit sich bringen, dass der Webseitenbetrachter eine für ihn individualisierte Webseite vorfindet, welche sich positiv auf ein Kaufverhalten des Webseitenbetrachters auswirken kann.

In anderen Worten kann das dynamische Einfügen von Informationen ein Empfangen, Herunterladen und/oder Ermitteln eines Eingabe-/Ausgabeelements des Webseitenbetrachters umfassen. Das Eingabe/Ausgabeelement gibt an, welche Form der Kommunikation der Webseitenbetrachter nutzen kann. Dies kann insbesondere vorteilhaft sein, wenn der Webseitenbetrachter Audio- oder visuelle Einschränkungen hat, beispielsweise eine Hörschädigung. So kann die Webseite bzw. der Webseiteninhalt derart angepasst werden, dass der Webseiteninhalt optimal für den Webseitenbetrachter dargestellt wird. Darüber hinaus kann das dynamische Einfügen von Informationen ein Empfangen, Herunterladen und/oder Generieren eines Historieelements umfassen. Das Historieelement kann angeben, wie oft der Webseitenbetrachter die Webseite betrachtet hat. Abhängig von der Anzahl der Besuche des Webseitenbetrachters auf der Webseite kann beispielsweise ein Begrüßungselement entsprechend angepasst werden. Darüber hinaus kann das dynamische Einfügen ein Empfangen, Herunterladen und/oder Bestimmen eines Demografieelements umfassen. Das Demografieelement kann dabei ein Alter und/oder ein Geschlecht des Webseitenbetrachters angeben. Ferner kann das dynamische Einfügen von Informationen ein Bestimmen, Berechnen und/oder Herunterladen eines Verhaltenselements des Webseitenbetrachters umfassen. Das Verhaltenselement kann eine Verweildauer des Webseitenbetrachters auf der Webseite, ein Scrollverhalten des Webseitenbetrachters und/oder ein Klickverhalten des Webseitenbetrachters angeben. Dabei kann unter einer Verweildauer des Webseitenbetrachters verstanden werden, dass die Konsumierung von Medieninhalten auf der Webseite zeitlich erfasst wird und anhand dieses Verhaltens das Verhaltenselement bestimmt wird. Darüber hinaus kann ein Scrollverhalten des Webseitenbetrachters ermittelt werden, welches beispielsweise durch das Erfassen einer Mausradbewegung und/oder eines Touchscreens erreicht werden kann. Ferner kann das Klickverhalten des Webseitenbetrachters durch die Anzahl und Häufigkeit pro Zeiteinheit des Webseitenbetrachters ermittelt werden. Ferner kann das dynamische Einfügen ein Herstellen, Etablieren und/oder Bereitstellen einer Verbindung zu einer Datenbank zum Empfang eines Informationselements umfassen. Dabei kann das Informationselement eine Socialmedianutzung des Webseitenbetrachters, eine Bonität des Webseitenbetrachters und/oder eine Geoposition des Webseitenbetrachters angeben. Darüber hinaus kann das dynamische Einfügen von Informationen ein Anpassen, Ändern und/oder Bereitstellen der Informationen im nicht sichtbaren Bereich basierend auf dem Eingabe-/Ausgabeelement, dem Historieelement, dem Demografieelement, dem Verhaltenselement und/oder dem Informationselement umfassen. Somit können die Informationen im nicht sichtbaren Bereich entsprechend eines Eingabe-/Ausgabeelements, welches beispielsweise eine Hörschädigung des Webseitenbetrachters angibt, ein Historieelement, welches beispielsweise eine Anzahl von Webseitenbesuchen des Webseitenbetrachters angibt, ein Demografieelement, welches beispielsweise ein Alter und/oder ein Geschlecht des Webseitenbetrachters angibt, ein Verhaltenselement, welches beispielsweise ein Scrollverhalten des Webseitenbetrachters angibt und/oder ein Informationselement, welches beispielsweise die Bonität eines Webseitenbetrachters angibt, geändert werden.

In einem nebengeordneten Aspekt wird eine Computernetzwerkstruktur, insbesondere ein Server, zur Generierung von zumindest Teilinhalten einer Webseite bereitgestellt, wobei die Computernetzwerkstruktur dazu eingerichtet ist, eine Webseite bereitzustellen, wobei die Webseite einen sichtbaren Bereich und einen nicht sichtbaren Bereich aufweist, wobei die Computernetzwerkstruktur ein Speichergerät zum Bereitstellen einer Vielzahl von Medienelementen aufweist, wobei die Computernetzwerkstruktur dazu eingerichtet ist, Signale zur Bestimmung zumindest einer Eigenschaft in einem Verhalten eines Webseitenbetrachters im sichtbaren Bereich zu empfangen, wobei die Computernetzwerkstruktur dazu eingerichtet ist, zumindest einen Teil der Medienelemente basierend auf der zumindest einen bestimmten Eigenschaft auszuwählen, wobei die Computernetzwerkstruktur dazu eingerichtet ist, den Teil der Medienelemente im nicht sichtbaren Bereich der Webseite einzufügen.

Ein Vorteil dieser Ausführungsform kann sein, dass mithilfe des empfangenen und/oder zu bestimmenden Verhaltens des Webseitenbetrachters in einem sichtbaren Bereich der Webseite Medieninhalte in einem nicht sichtbaren Bereich der Webseite basierend auf dem Verhalten des Webseitenbetrachters angepasst werden können und somit beispielsweise ein verbessertes Einkaufserlebnis für den Webseitenbetrachter erreicht werden kann. Darüber hinaus kann mittels der Anpassung der Medieninhalte auf der Webseite ebenfalls ein Datenvolumen reduziert werden, welches zwischen der Computernetzwerkstruktur und dem Computerendgerät ausgetauscht wird, da nur Medieninhalte angezeigt werden, die dem Verhalten des Webseitenbetrachters entsprechen.

Bei einer Computernetzwerkstruktur kann es sich um einen Cloud-Rechennetzwerk und/oder einen Cloudspeicher handeln, einen Server und/oder einen Computer, welcher mit dem Internet verbunden ist. Die Computernetzwerkstruktur kann zumindest über einen Prozessor, einen Arbeitsspeicher und/oder eine Festplatte verfügen, welche dazu eingerichtet sind, eine Webseite bereitzustellen. Ferner kann dabei die Webseite einen sichtbaren und einen nicht sichtbaren Bereich aufweisen, wobei der sichtbare Bereich einen Bereich der Webseite widerspiegelt, welche durch den Webseitenbetrachter mittels seines Computerendgeräts sichtbar bzw. darstellbar ist. Ferner weist die Computernetzwerkstruktur ein Speichergerät auf, wie beispielsweise eine Festplatte, einen USB-Stick, eine CD, eine DVD, eine Solid State Disc oder eine magnetische Festplatte oder Ähnliches. Das Speichergerät der Computernetzwerkstruktur ist dazu eingerichtet, eine Vielzahl an Medienelementen, zu speichern, bereitzustellen und/oder zur Verfügung zu stellen. Ferner ist die Computernetzwerkstruktur dazu eingerichtet, Signale zur Bestimmung zumindest einer Eigenschaft in einem Verhalten des Webseitenbetrachters im sichtbaren Bereich zu empfangen, herunterzuladen und/oder zu bestimmen. Unter dem Begriff "Signale zur Bestimmung zumindest einer Eigenschaft in einem Verhalten eines Webseitenbetrachters im sichtbaren Bereich" können beispielsweise Nutzereingaben verstanden werden, wie z. B. ein Scrollverhalten, Klickverhalten oder Swipe- bzw. Wischverhalten. Ferner kann die Computernetzwerkstruktur dazu eingerichtet sein, zumindest einen Teil der Medienelemente basierend auf der zumindest einen bestimmten Eigenschaft auszuwählen, zu selektieren und/oder bereitzustellen. Bei dem Teil der Medienelemente kann es sich z. B. um eine Auswahl von spezifischen Medienelementen aus der Vielzahl von Medienelementen handeln, welche einem Vorliegen bzw. einem Verhalten des Webseitenbetrachters entsprechen. Ferner kann die Computernetzwerkstruktur dazu eingerichtet sein, den Teil der Medienelemente im nicht sichtbaren Bereich der Webseite einzufügen, bereitzustellen und/oder hochzuladen. In anderen Worten ist somit die Computernetzwerkstruktur dazu in der Lage, Medienelemente auf der Webseite im nicht sichtbaren Bereich auszutauschen, einzufügen und/oder bereitzustellen.

In einem nebengeordneten Aspekt wird ein Computerendgerät zum Darstellen einer Webseite bereitgestellt, aufweisend zumindest eine Bildschirmeinheit und eine Eingabeeinheit, wobei die Bildschirmeinheit dazu eingerichtet ist, einen sichtbaren Bereich der Webseite darzustellen, wobei das Computerendgerät dazu eingerichtet ist, einen nicht sichtbaren Bereich der Webseite bereitzustellen, wobei die Eingabeeinheit dazu eingerichtet ist, eine Darstellung der Webseite zu verändern, wobei die Webseite zumindest zwei Medienelemente aufweist, wobei die Eingabeeinheit dazu eingerichtet ist, zumindest eines der zumindest zwei Medienelemente basierend auf einer Eingabe des Webseitenbetrachters auszuwählen, wobei zumindest eine Information im nicht sichtbaren Bereich gemäß dem Verfahren, wie voranstehend und nachfolgend beschrieben, angepasst wird.

Ein Vorteil dieser Ausführungsform kann sein, dass mithilfe einer einfachen Eingabe mittels der Eingabeeinheit auf dem Computerendgerät die Webseiteninhalte in einem nicht sichtbaren Bereich für einen Webseitenbetrachter angepasst werden können, sodass diese einer Vorstellung bzw. Vorliebe des Webseitenbetrachters angepasst werden können, um beispielsweise einen Kaufvorgang positiv zu beeinflussen.

In anderen Worten kann es sich bei dem Computerendgerät beispielsweise um ein Smartphone, ein Tablet, einen Computer oder jede andere Form von Computerendgeräten handeln. Bei der Bildschirmeinheit des Computerendgeräts kann es sich beispielsweise um einen Monitor eines Computers, einen Monitor eines Smartphones oder Ähnlichem handeln. Ferner kann das Computerendgerät eine Eingabeeinheit aufweisen, wobei die Eingabeeinheit beispielsweise eine Maus, Tastatur, Touchscreen oder eine andere Form der Eingabe sein kann. Ferner kann die Bildschirmeinheit dazu eingerichtet sein, den sichtbaren Bereich der Webseite darzustellen, anzuzeigen und/oder auszugeben. Ferner kann das Computerendgerät dazu eingerichtet sein, einen nicht sichtbaren Bereich der Webseite bereitzustellen, herunterzuladen und/oder zu puffern. Ferner kann die Eingabeeinheit dazu eingerichtet sein, eine Darstellung der Webseite zu verändern. Darunter kann beispielsweise ein Scroll- oder Klickvorgang des Webseitenbetrachters mittels der Eingabeeinheit verstanden werden, welcher eine veränderte Darstellung der Webseite auslöst. Darüber hinaus kann die Eingabeeinheit dazu eingerichtet sein, zumindest eines der zwei Medienelemente basierend auf einer Eingabe des Webseitenbetrachters auszugeben, zu selektieren und/oder zu bestimmen. In anderen Worten werden dem Webseitenbetrachter zumindest zwei Medienelemente angezeigt, wobei der Webseitenbetrachter mithilfe der Eingabeeinheit, wie beispielsweise einer Maus bzw. Mauszeiger, eines der beiden Medienelemente auswählen kann. Ferner kann zumindest eine Information im nicht sichtbaren Bereich gemäß dem Verfahren, wie voranstehend und nachfolgend beschrieben, insbesondere basierend auf dem ausgewählten Medienelement angepasst werden.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
**Fig. 1** eine schematische Darstellung einer Webseite gemäß einer Ausführungsform.
**Fig. 2** zeigt eine schematische Darstellung einer Webseite gemäß einer Ausführungsform.
**Fig. 3** zeigt eine schematische Darstellung einer Webseite gemäß einer Ausführungsform.
**Fig. 4** zeigt eine schematische Darstellung einer Webseite gemäß einer Ausführungsform.
**Fig. 5** zeigt eine Computernetzwerkstruktur gemäß einer Ausführungsform.
**Fig. 6** zeigt ein Computerendgerät gemäß einer Ausführungsform.
**Fig. 7** zeigt ein Flussdiagramm zur Illustration von Schritten gemäß eines Verfahrens gemäß einer Ausführungsform.
**Fig. 8** zeigt ein Flussdiagramm zur Illustration von Schritten gemäß eines Verfahrens gemäß einer Ausführungsform.

In den Figuren sind gleichartige Elemente mit gleichen Bezugszeichen beziffert. Die Figuren zeigen lediglich Beispiele und sind nicht beschränkend zu verstehen.

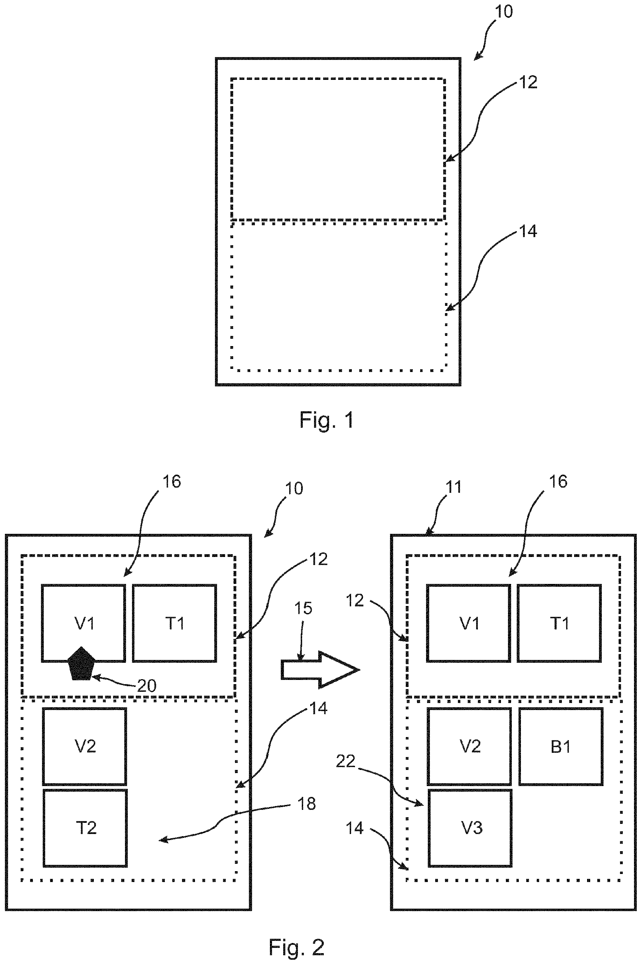

Fig. 1 zeigt eine Webseite 10, welche Teilinhalte durch Trennung in einen sichtbaren Bereich 12 und einen nicht sichtbaren Bereich 14 unterteilt ist. Im nicht sichtbaren Bereich 14 können Informationen dynamisch eingefügt werden. Das dynamische Einfügen von Informationen basiert auf dem Verhalten eines Webseitenbetrachters im sichtbaren Bereich 12. Ferner kann im sichtbaren Bereich 12 eine Vielzahl von Medienelementen V1, T1 dargestellt werden. Ferner kann im nicht sichtbaren Bereich 14 eine Vielzahl von Medienelementen V2, T2 vorgehalten bzw. bereitgestellt werden.

Ein Vorteil dieser Ausführungsform kann sein, dass mithilfe der Trennung in einen sichtbaren Bereich 12 und in einen nicht sichtbaren Bereich 14 der Webseite 10 Medieninhalte im nicht sichtbaren Bereich 14 gemäß einem Verhalten des Webseitenbetrachters im sichtbaren Bereich 12 angepasst werden können, um somit ein Datenvolumen zur Übertragung von Medieninhalten zu reduzieren.

Fig. 2 zeigt eine Webseite 10 zu einem ersten Zeitpunkt und eine Webseite 11 zu einem zweiten Zeitpunkt. Die Webseite 10 weist einen ersten Medieninhalt 16 auf, welcher aus einem Video V1 und einem Text T1 besteht. Der erste Medieninhalt 16 ist im sichtbaren Bereich 12 der Webseite 10 für den Webseitenbetrachter sichtbar. Der Webseitenbetrachter kann mittels eines Eingabemittels 20 eines der Medien des ersten Medieninhalts 16 auswählen. Ferner verfügt die Webseite 10 über einen nicht sichtbaren Bereich 14, in dem sich ein zweiter Medieninhalt 18 befindet, bestehend aus einem Video V2 und einem Text T2. Symbolisch zeigt der Pfeil 15 eine Auswahl des Webseitenbetrachters an, sodass die Webseite 10 zu einem ersten Zeitpunkt zur Webseite 11 zu einem zweiten Zeitpunkt wechselt, wobei im zweiten Zeitpunkt bereits eine Auswahl mittels des Eingabemittels 20 durch den Webseitenbetrachter stattgefunden hat. Auf der Webseite 11 gibt es einen ersten Medieninhalt 16 im sichtbaren Bereich 12, welcher aus dem Video V1 und dem Text T1 besteht. Im nicht sichtbaren Bereich 14 wurde ein dritter Medieninhalt 22 bereitgestellt, welcher basierend auf der Eingabe durch den Webseitenbetrachter angepasst wurde, da beispielsweise der Webseitenbetrachter mittels des Eingabemittels 20 das Video V1 ausgewählt hat. Entsprechend können im nicht sichtbaren Bereich 14 bzw. im dritten Medieninhalt 22 mehr Videos, insbesondere die Videos V2 und V3, im nicht sichtbaren Bereich 14 eingefügt werden. Ferner können durch die Auswahl eines Videos durch den Webseitenbetrachter auch videoähnliche Elemente, wie beispielsweise das Bild B1, in den nicht sichtbaren Bereich 14 eingefügt werden. Somit können im nicht sichtbaren Bereich 14 die Medieninhalte entsprechend des Verhaltens des Webseitenbetrachters angepasst werden, sodass ein Datenvolumen zur Übertragung von Medieninhalten zwischen einer Computernetzwerkstruktur 80 und einem Computerendgerät 90 reduziert werden kann.

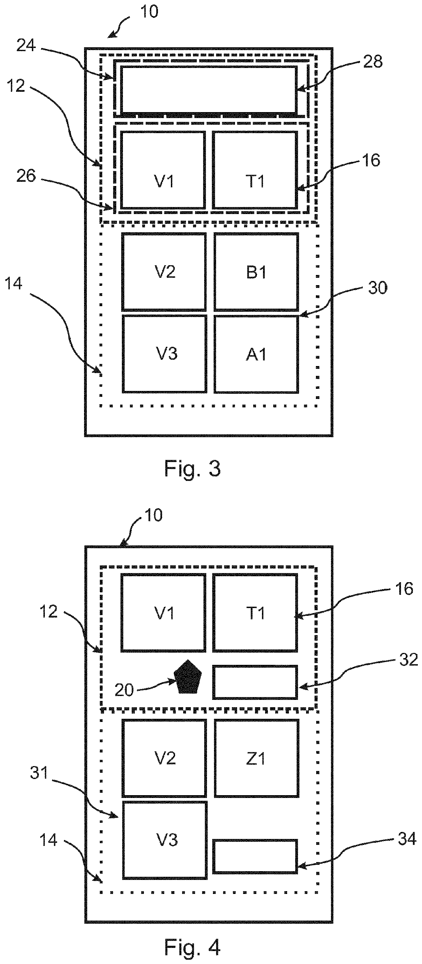

Fig. 3 zeigt eine Form der Webseite 10, welche einen sichtbaren Bereich 12 und einen nicht sichtbaren Bereich 14 aufweist. Ferner weist der sichtbare Bereich 12 einen ersten Bereich 24 auf und einen zweiten Bereich 26 auf. In dem ersten Bereich 24 ist ein Begrüßungselement 28 angeordnet bzw. positioniert. Im zweiten Bereich 26 ist der erste Medieninhalt 16 positioniert, welcher aus einem Video V1 und einem Text T1 besteht. Das Begrüßungselement 28 kann basierend auf der Tageszeit oder einer Wettersituation angepasst werden. So kann beispielsweise nach einem Regenereignis taubetropfte Blumen oder eine feuchte Wiese dargestellt werden, oder bei einem bevorstehenden Gewitter dunkle Farben gewählt werden. In Abhängigkeit des aktuellen Zustands des Begrüßungselements 28 kann noch ein vierter Medieninhalt 30 bereitgestellt werden, welcher aus einem Video V2, einem Video V3, einem Bild B1 und einer Audiodatei A1 besteht.

Fig. 4 zeigt eine Webseite 10, welche einen sichtbaren Bereich 12 und einen nicht sichtbaren Bereich 14 aufweist. Im sichtbaren Bereich 12 der Webseite 10 befindet sich ein erster Medieninhalt 16. Das Eingabemittel 20 kann durch den Webseitenbetrachter derart genutzt werden, dass er das Video V1 oder der Text T1 aus dem ersten Medieninhalt auswählen kann. Ferner kann das Eingabemittel 20 dazu genutzt werden, ein erstes Buttonelement 32 auszulösen. Beispielsweise kann das erste Buttonelement 32 eine Kaufbestätigung eines Produktes, welches durch das Video V1 und den Text T1 präsentiert wird, darstellen. Darüber hinaus weist der nicht sichtbare Bereich 14 einen fünften Medieninhalt 31 auf, welcher aus einem Video V2, einem Video V3, einem Zertifizierungselement Z1 sowie aus einem zweiten Buttonelement 34 besteht. Der fünfte Medieninhalt 31 ist im nicht sichtbaren Bereich 14. Das zweite Buttonelement 34 kann im nicht sichtbaren Bereich 14 insbesondere dann hinzugefügt werden, wenn das Eingabemittel 20 im Wesentlichen die gleiche Position aufweist, wie das erste Buttonelement 32 jedoch keine Aktivierung des ersten Buttonelements 32 durch das Eingabemittel 20 erfolgt. Dies bedeutet in diesem Beispiel, dass der Kaufvorgang noch nicht abgeschlossen wurde und somit dem Webseitenbetrachter eine zweite Möglichkeit durch das zweite Buttonelement 34 geboten wird, um das Produkt zu kaufen. Um den Webseitenbetrachter in seiner Kaufentscheidung zu unterstützen, kann, wenn das Eingabemittel 20 im Wesentlichen die gleiche Position hat wie das erste Buttonelement 32, eine Aktivierung des ersten Buttonelements jedoch ausbleibt, ein Zertifizierungselement Z1 im nicht sichtbaren Bereich 14 der Webseite 10 eingeführt werden, um den Webseitenbetrachter in seiner Kaufentscheidung zu unterstützen, sodass der Webseitenbetrachter mittels des Eingabeelements 20 das zweite Buttonelement 34 auslöst.

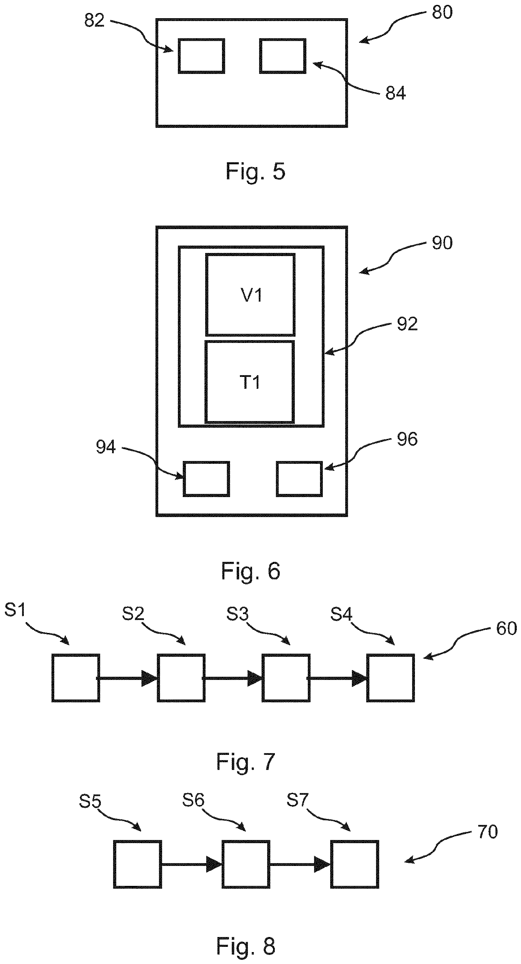

Fig. 5 zeigt eine Computernetzwerkstruktur 80, welche ein Speichergerät 82 zum Bereitstellen einer Vielzahl von Medienelementen aufweist. Ferner kann die Computernetzwerkstruktur eine Schnittstelle 84 aufweisen, welche dazu eingerichtet ist, die Computernetzwerkstruktur beispielsweise mit dem Internet oder einer anderen Komponente, wie einem Computerendgerät 90, zu verbinden, um somit Signale, Informationen und Daten auszutauschen.

Fig. 6 zeigt ein Computerendgerät 90, welches eine Bildschirmeinheit 92 und eine Eingabeeinheit 94 aufweist. Ferner kann das Computerendgerät 90 eine Bedienerschnittstelle 96 aufweisen, welche dazu eingerichtet ist, Informationen und Signale mit dem Internet bzw. einer Computernetzwerkstruktur 80 auszutauschen. Ferner kann die Bildschirmeinheit 92 ein Video V1 und einen Text T1 darstellen. In diesem Beispiel ist die Anzeigefläche der Bildschirmeinheit 92 der sichtbare Bereich 12 der Webseite 10. Der Webseitenbetrachter kann mittels der Eingabeeinheit 94 einen Scroll- oder ähnlichen Vorgang auslösen, sodass der nicht sichtbare Bereich 14 der Webseite 10 sichtbar wird in dem dieser auf der Bildschirmeinheit 92 dargestellt wird. Ferner kann mithilfe der Eingabeeinheit 94 ein Verhalten des Webseitenbetrachters im sichtbaren Bereich 12 der Webseite 10 bzw. der Anzeigefläche der Bildschirmeinheit 92 ermittelt werden. Bei dem Computerendgerät 90 kann es sich beispielweise um ein Smartphone, Tablet oder einen Computer handeln.

Fig. 7 zeigt ein Flussdiagramm zur Illustration von Schritten des Verfahrens 60. Dabei weist das Verfahren 60 den Schritt Erfassen S1 des sichtbaren Bereichs 12 der Webseite 10 auf einem Anzeigegerät 92 auf. Ferner weist das Verfahren 60 den Schritt Darstellen S2 von zumindest zwei Medienelementen V1, T1 im sichtbaren Bereich 12 der Webseite 10 auf. Darüber hinaus weist das Verfahren 60 den Schritt Empfangen S3 einer Angabe des Webseitenbetrachters zur Auswahl eines der zumindest zwei Medienelemente V1, T1 auf. Zudem weist das Verfahren 60 den Schritt Berechnen S4 des Verhaltens des Webseitenbetrachters basierend auf der Eingabe zur Auswahl auf. In anderen Worten werden auf einem Anzeigegerät 92 zumindest zwei Medienelemente V1, T1 dargestellt, wobei der Webseitenbetrachter eines der beiden Medienelemente beispielsweise mittels eines Mausklicks oder einer Mausspur auswählt und daraufhin ein Verhalten des Webseitenbetrachters berechnet wird, welches auf der Auswahl basiert.

Fig. 8 zeigt ein Flussdiagramm zur Illustration von Schritten eines weiteren Verfahrens 70. Das Verfahren 70 weist u. a. den Schritt Bereitstellen S5 einer Vielzahl an Medienelementen auf einem Speichergerät 82 auf. Darüber hinaus weist das weitere Verfahren 70 den Schritt Auswählen S6 zumindest eines Teils der Medienelemente V1, T1 basierend auf dem Verhalten des Webseitenbetrachters auf. Ferner weist das weitere Verfahren 70 ein Einfügen S7 des Teils der Medienelemente V1, T1 im nicht sichtbaren Bereich 14 der Webseite 10 auf.

Merkmale und Elemente des Computerendgeräts und/oder der Computernetzwerkstruktur, so wie voranstehend und nachfolgend beschrieben, können Merkmale, Elemente und/oder Schritte des Verfahrens, so wie voranstehend und nachfolgend beschrieben, sein und umgekehrt.

Ferner ist darauf hinzuweisen, dass der Begriff der Einheit vorliegend ebenfalls frei zu verstehen ist und sowohl eine einteilige Ausbildung als auch eine mehrteilige Ausbildung der jeweiligen Einheiten umfasst ist, wobei die jeweiligen Teile einer Einheit nicht an einer Position vorgesehen sein müssen, sondern auch für Teile an einem Gegenstand vorgesehen sein können.

Ergänzend sei darauf hingewiesen, dass "umfassend" und "aufweisend" keine anderen Elemente ausschließt und die unbestimmten Artikel "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiel verwendet werden können Bezugszeichen in den Ansprüchen sind nicht als Einschränkungen anzusehen.

### Bezugszeichenliste

- 10: Webseite
- 11: Webseite zu einem zweiten Zeitpunkt
- 12: sichtbarer Bereich
- 14: nicht sichtbarer Bereich
- 15: Pfeil
- 16: erster Medieninhalt
- 18: zweiter Medieninhalt
- 20: Eingabemittel
- 22: dritter Medieninhalt
- 24: erster Bereich
- 26: zweiter Bereich
- 28: Begrüßungselement
- 30: vierter Medieninhalt
- 31: fünfter Medieninhalt
- 32: erstes Buttonelement
- 34: zweites Buttonelement
- 60: Verfahren
- 70: weiteres Verfahren
- 80: Computernetzwerkstruktur
- 82: Speichergerät
- 84: Schnittstelle
- 90: Computerendgerät
- 92: Bildschirmeinheit
- 94: Eingabeeinheit
- 96: Benutzerschnittstelle
- S1: Erfassen
- S2: Darstellen
- S3: Empfangen
- S4: Berechnen
- S5: Bereitstellen
- S6: Auswählen
- S7: Einfügen
- V1: Video 1
- V2: Video 2
- V3: Video 3
- T1: Text 1
- T2: Text 2
- B1: Bild 1
- A1: Audio 1
- Z1: Zertifizierungselement 1

## Patentansprüche

1. Verfahren zur Generierung von zumindest Teilinhalten einer Website (10) durch Trennung in einen sichtbaren (12) und einen nichtsichtbaren (14) Bereich eines Webseiteninhalts, wobei im nichtsichtbaren Bereich (14) Informationen dynamisch eingefügt werden, die auf dem Verhalten eines Webseitenbetrachters im sichtbaren Bereich (12) basieren.

2. Verfahren nach Anspruch 1, wobei die vom Webseitenbetrachters genutzte Anzeigehardware, bzw. der Umfangs der von der Website auf der Anzeigehardware dargestellten Inhalte erfasst wird und die einzufügenden Informationen im nicht sichtbaren Bereich (14) auf Basis von Interaktionen des Webseitenbetrachters mit den im sichtbaren Bereich (12) dargestellten Informationen beruhen.

3. Verfahren nach Anspruch 1 oder 2, wobei der noch nicht dargestellte und dynamisch anpassbare Inhalt des nicht sichtbaren Bereichs (14) durch einen Scrollvorgang in den Anzeigebereich der Anzeigehardware darstellbar ist, und diese Information vor dem Erscheinen im Sichtbereich adaptiv entsprechend der Vorlieben des Webseitenbetrachters angepasst wird.

4. Verfahren gemäß einem der vorherigen Ansprüche, **dadurch gekennzeichnet, dass** das Erfassen des Verhaltens des Webseitenbetrachters im sichtbaren Bereich, die Schritte aufweist:
- Erfassen des sichtbaren Bereichs (12) der Website (10) auf einem Anzeigegerät (92),
- Darstellen von zumindest zwei Medienelementen (V1, T1) im sichtbaren Bereich (12) der Webseite (10),
- Empfangen einer Eingabe des Webseitenbetrachters zur Auswahl eines der zumindest zwei Medienelemente (V1, T1),
- Berechnen des Verhaltens des Webseitenbetrachters basierend auf der Eingabe zur Auswahl.

5. Verfahren gemäß Anspruch 4, **dadurch gekennzeichnet, dass** die Eingabe des Webseitenbetrachters eine Auswahl eines der zumindest zwei Medienelemente (V1, T1) mittels einer Nutzereingabe ist, eine Verweilzeit eines Blickes des Webseitenbetrachters auf einem der zumindest zwei Medienelemente ist und/oder eine Nutzungsdauer eines der zumindest zwei Medienelemente durch den Webseitenbetrachter ist.

6. Verfahren gemäß einem der Ansprüche 4 bis 5, **dadurch gekennzeichnet, dass** jedes der zumindest zwei Medienelemente einen Typ aufweist, wobei der Typ des Medienelements ein Videoelement (V1, V2, V3), ein Audioelement (A1), ein Textelement (T1) und/oder ein Bildelement (B1) ist, wobei das Verfahren den Schritt aufweist:
- Berechnen des Verhaltens des Webseitenbetrachters basierend auf der Eingabe zur Auswahl und dem Typ des ausgewählten Medienelements.

7. Verfahren gemäß einem der vorherigen Ansprüche, **dadurch gekennzeichnet, dass** das dynamische Einfügen von Informationen in den nicht sichtbaren Bereich (12) die Schritte aufweist:
- Bereitstellen einer Vielzahl an Medienelementen auf einem Speichergerät (82),
- Auswählen zumindest eines Teils der Medienelemente basierend auf dem Verhalten des Webseitenbetrachters,
- Einfügen des Teils der Medienelemente im nicht sichtbaren Bereich (14) der Webseite (10).

8. Verfahren gemäß einem der Ansprüche 6 bis 7, **dadurch gekennzeichnet, dass** das dynamische Einfügen von Informationen die Schritte aufweist:
- Empfangen einer Nutzereingabe zum Darstellen des nicht sichtbaren Bereichs (14),
- Darstellen des Teils der Medienelemente im sichtbaren Bereich (12).

9. Verfahren gemäß einem der vorherigen Ansprüche, **dadurch gekennzeichnet, dass** der sichtbare Bereich (12) der Webseite (10) einen ersten Bereich (24) und einen zweiten Bereich (26) aufweist, wobei der zweite Bereich (26) dazu eingerichtet ist, zumindest ein Medienelement darzustellen, wobei der erste Bereich (24) dazu eingerichtet ist, zumindest ein Begrüßungselement (28) darzustellen, wobei das Verfahren die Schritte aufweist:
- Bereitstellen einer Vielzahl von Begrüßungselementen auf einem Datenträger,
- Empfangen zumindest einer Charakteristik des Webseitenbetrachters,
- Bestimmen zumindest einer Variablen, wobei die Variable ein Zeitelement, Wetterelement, Datumselement und/oder ein Situativelement ist,
- Anpassen des Begrüßungselements (28) basierend auf der Charakteristik des Webseitenbetrachters und der bestimmten Variablen.

10. Verfahren gemäß einem der vorherigen Ansprüche, **dadurch gekennzeichnet, dass** der sichtbare Bereich (12) der Webseite (10) zumindest ein erstes Buttonelement (32) aufweist, wobei das Verfahren die Schritte aufweist:
- Detektieren eine Position eines Eingabemittels (20) des Webseitenbetrachters,
- Vergleichen der Position des Eingabemittels (20) des Webseitenbetrachters mit einer Position des ersten Buttonelements (32) im sichtbaren Bereich (12),
- Ändern der Informationen im nicht sichtbaren Bereich (14), wenn die Position des Eingabemittels (20) des Webseitenbetrachters mit der Position des ersten Buttonelements (32) im Wesentlichen übereinstimmt und keine Aktivierung des ersten Buttonelements (32) durch das Eingabemittel (20) des Webseitenbetrachters erfolgt.

11. Verfahren gemäß Anspruch 10, **dadurch gekennzeichnet, dass** das Verfahren den Schritt aufweist:
- Hinzufügen eines zweiten Buttonelements (34) im nicht sichtbaren Bereich (14), wenn die Position des Eingabemittels (20) des Webseitenbetrachters mit der Position des ersten Buttonelements (32) im Wesentlichen übereinstimmt und keine Aktivierung des ersten Buttonelements (32) durch das Eingabemittel (20) des Webseitenbetrachters erfolgt.

12. Verfahren gemäß einem der Ansprüche 10 bis 11, **dadurch gekennzeichnet, dass** das Verfahren den Schritt aufweist:
- Anpassen der Informationen im nichtsichtbaren Bereich (14), wenn die Position des Eingabemittels (20) des Webseitenbetrachters mit der Position des ersten Buttonelements (32) im Wesentlichen übereinstimmt und keine Aktivierung des ersten Buttonelements (32) durch das Eingabemittel (20) des Webseitenbetrachters erfolgt,
wobei das Anpassen der Informationen die Schritte aufweist:
- Bereitstellen einer Vielzahl von Zertifizierungselementen auf einem Datenträger,
- Darstellen zumindest eines Teils der Zertifizierungselemente (Z1) im nichtsichtbaren Bereich (14).

13. Verfahren gemäß einem der vorherigen Ansprüche, **dadurch gekennzeichnet, dass** das dynamische Einfügen von Informationen im nichtsichtbaren Bereich zumindest einen der folgenden Schritte, insbesondere alle folgenden Schritte aufweist:
- Empfangen eines Eingabe-/Ausgabeelements des Webseitenbetrachters, wobei das Eingabe-/Ausgabeelement angibt, welche Form der Kommunikation der Webseitenbetrachter nutzen kann,
- Empfangen eines Historieelements, wobei das Historieelement angibt, wie oft der Webseitenbetrachter die Website betrachtet hat,
- Empfangen eines Demographieelements, wobei das Demopgraphieelement ein Alter und/oder ein Geschlecht des Webseitenbetrachters angibt,
- Bestimmen eines Verhaltenselements des Webseitenbetrachter, wobei das Verhaltenselement eine Verweildauer des Webseitenbetrachters auf der Webseite, ein Scrollverhalten des Webseitenbetrachters, und/oder ein Klickverhalten des Webseitenbetrachters angibt,
- Herstellen einer Verbindung zu einer Datenbank zum Empfangen eines Informationselements, wobei das Informationselement eine Social-Medianutzung des Webseitenbetrachters, eine Bonität des Webseitenbetrachters und/oder eine Geoposition des Webseitenbetrachters angibt,
- Anpassen der Informationen im nicht sichtbaren Bereich basierend auf dem Eingabe-/Ausgabeelement, dem Historieelement, dem Demographieelement, dem Verhaltenselement und/oder dem Informationselement.

14. Computernetzwerkstruktur (80), insbesondere ein Server, zur Generierung von zumindest Teilinhalten einer Website (10), wobei die Computernetzwerkstruktur dazu eingerichtet ist, eine Webseite (10) bereitzustellen, wobei die Webseite (10) einen sichtbaren Bereich (12) und einen nichtsichtbaren Bereich (14) aufweist, wobei die Computernetzwerkstruktur ein Speichergerät (82) zum Bereitstellen einer Vielzahl an Medienelementen aufweist, wobei die Computernetzwerkstruktur dazu eingerichtet ist, Signale zur Bestimmung zumindest einer Eigenschaft in einem Verhalten eines Webseitenbetrachters im sichtbaren Bereich (12) zu empfangen, wobei die Computernetzwerkstruktur dazu eingerichtet ist, zumindest einen Teil der Medienelemente basierend auf der zumindest einen bestimmten Eigenschaft auszuwählen, wobei die Computernetzwerkstruktur dazu eingerichtet ist, den Teil der Medienelemente im nicht sichtbaren Bereich (14) der Webseite (10) einzufügen.

15. Computerendgerät (90) zum Darstellen einer Website (10), aufweisend zumindest eine Bildschirmeinheit (92) und eine Eingabeeinheit (94), wobei die Bildschirmeinheit (92) dazu eingerichtet ist, einen sichtbaren Bereich (12) der Website (10) darzustellen, wobei das Computerendgerät dazu eingerichtet ist, einen nicht sichtbaren Bereich (14) der Website (10) bereitzustellen, wobei die Eingabeeinheit (94) dazu eingerichtet ist, eine Darstellung der Website (10) zu verändern, wobei die Website (10) zumindest zwei Medienelemente (V1, T1) aufweist, wobei die Eingabeeinheit (94) dazu eingerichtet ist, zumindest eines der zumindest zwei Medienelemente (V1,T1) basierend auf einer Eingabe des Webseitenbetrachters auszuwählen, wobei zumindest eine Information im nicht sichtbaren Bereich (14) gemäß dem Verfahren nach einem der Ansprüche 1 bis 13 angepasst wird.
